(19) Europäisches Patentamt
European Patent Office
Office européen des brevets

(11) **EP 1 532 802 B1**

(12) **EUROPÄISCHE PATENTSCHRIFT**

(45) Veröffentlichungstag und Bekanntmachung des Hinweises auf die Patenterteilung:
**14.10.2009 Patentblatt 2009/42**

(21) Anmeldenummer: **03793592.1**

(22) Anmeldetag: **08.08.2003**

(51) Int Cl.:
**H04M 11/00** *(2006.01)*

(86) Internationale Anmeldenummer:
**PCT/DE2003/002673**

(87) Internationale Veröffentlichungsnummer:
**WO 2004/023776 (18.03.2004 Gazette 2004/12)**

(54) **KOMMUNIKATIONSANORDUNG UND ÜBERTRAGUNGSEINHEIT ZUR INFORMATIONSÜBERMITTLUNG ÜBER ZUMINDEST EINE ÜBERTRAGUNGSLEITUNG SOWIE AN DIE ÜBERTRAGUNGSEINHEIT ANSCHLIESSBARE SCHALTUNGSANORDNUNG**

COMMUNICATION ARRANGEMENT AND TRANSMISSION UNIT FOR INFORMATION TRANSFER BY MEANS OF AT LEAST ONE TRANSMISSION LINE AND A CIRCUIT ARRANGEMENT FOR CONNECTION TO THE TRANSMISSION UNIT

SYSTEME DE COMMUNICATION ET UNITE DE TRANSMISSION POUR LA TRANSMISSION D'INFORMATIONS PAR L'INTERMEDIAIRE D'AU MOINS UNE LIGNE DE TRANSMISSION ET ENSEMBLE CIRCUIT POUVANT ETRE RELIE A CETTE UNITE DE TRANSMISSION

(84) Benannte Vertragsstaaten:
**DE ES FR GB IT**

(30) Priorität: **30.08.2002 DE 10240140**

(43) Veröffentlichungstag der Anmeldung:
**25.05.2005 Patentblatt 2005/21**

(73) Patentinhaber: **Nokia Siemens Networks GmbH & Co. KG**
**81541 München (DE)**

(72) Erfinder: **KUNISCH, Paul**
**82178 Puchheim (DE)**

(56) Entgegenhaltungen:
**EP-A- 1 079 589          US-A- 5 856 758**

**Beschreibung**

In aktuellen Teilnehmeranschlussnetzen - auch als Access-Networks bezeichnet - sind die Teilnehmer häufig über Kupferdoppeladern bzw. über 2-Drahtleitungen an die lokal nächstgelegene Vermittlungseinrichtung angeschlossen. Über diese 2-Drahtleitung werden sowohl schmalbandige, beispielsweise gemäß dem ISDN-Übertragungsverfahren ausgestaltete Signale als auch breitbandige, beispielsweise mit Hilfe eines xDSL-Übertragungsverfahren ausgestaltete Signale zwischen der Vermittlungseinrichtung und dem daran angeschlossenen Teilnehmer übermittelt.

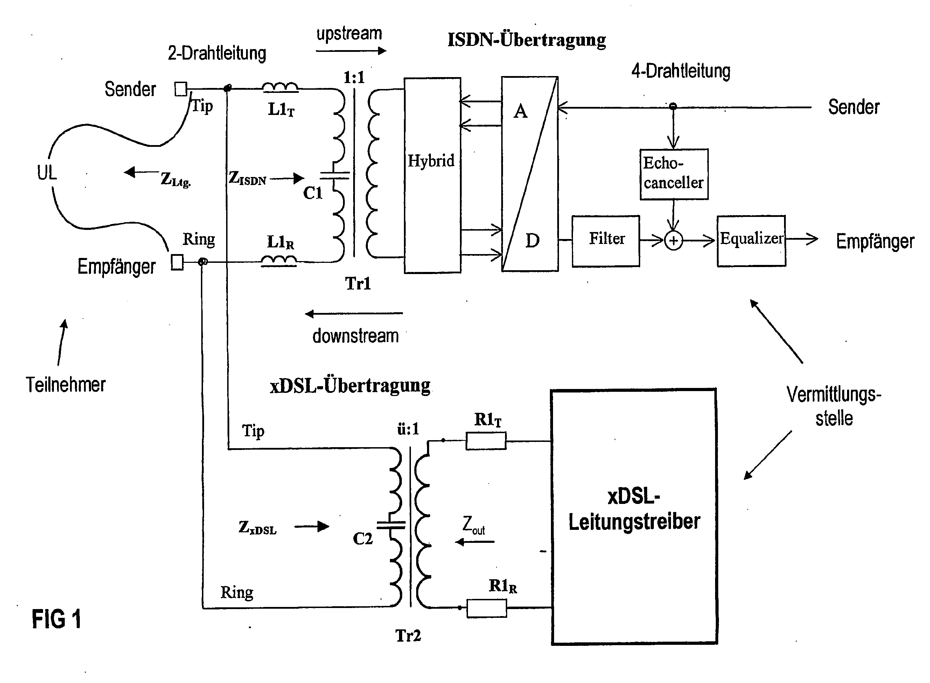

In FIG 1 ist ein in bestehenden Teilnehmeranschlussnetzen aktuell eingesetztes Anschluss-Szenario dargestellt, durch welches einem Teilnehmer sowohl ein schmalbandiger Teilnehmeranschluss (ISDN-Übertragung) als auch ein breitbandiger Teilnehmeranschluss (xDSL-Übertragung) bereitgestellt wird. Gemäß FIG 1 ist die xDSL-Übertragung direkt, d.h. ohne den Einsatz eines Splitters, an die 2-Drahtleitung geschaltet. Bei der ISDN-Übertragung wird in beiden Übertragungsrichtungen das gleiche Frequenzspektrum genutzt. Für die Übertragung der in beide Übertragungsrichtungen ausgesendeten Signale über einen gemeinsamen Übertragungskanal (hier die Kupferdoppeladder) ist ein Verfahren zur Richtungstrennung erforderlich. Häufig wird dabei das Echokompensationsverfahren eingesetzt. Beim Echokompensationsverfahren erfolgt die Richtungstrennung in einem ersten Schritt durch eine Gabelschaltung - im folgenden auch als Hybrid bezeichnet - welche jeweils an beiden Enden der Übertragungsleitung angeordnet ist. Durch die Gabelschaltung ist gleichzeitig der Übergang zwischen Zweidraht- und Vierdrahtleitung realisiert.

Das Echokompensationsverfahren hat den Nachteil, dass aufgrund der unvollständigen Leitungsnachbildung in der Gabelschaltung und durch zusätzliche Reflektionen auf dem Übertragungsweg ein Teil des Sendesignals als Echo in den eigenen Empfänger gelangt und sich somit dem eingehenden Empfangssignal als Störsignal überlagert. Durch Einsatz eines Echokompensators wird dieses Echo adaptiv, d.h. sich selbstständig auf die Leitung einstellend, nachgebildet und vom Signal der Empfangsrichtung ( bestehend Empfangssignal und Echo) subtrahiert, so dass letztendlich nur das gewünschte Empfangssignal an den Empfänger gelangt. Der Echokompensator ist als Transversalfilter (Tiefpass) ausgelegt, dessen Koeffizienten von einer Steuerung adaptiv eingestellt werden.

Bei längeren Teilnehmeranschlussleitungen ist das von einem Teilnehmer in Richtung Vermittlungsstelle bzw. Vermittlungseinrichtung ausgesendete Signal - im folgendem als Upstreamsignal bezeichnet - am Empfangsort (Vermittlungseinrichtung) stark gedämpft und aufgrund der frequenzabhängigen Gruppenlaufzeit stark verzerrt. Das im Vergleich dazu mit hoher Leistung in Richtung Teilnehmer ausgesendete Signal - im folgendem als Downstreamsignal bezeichnet - überlagert sich dem Upstreamsignal. Aufgabe der Gabelschaltung bzw. des Hybrid und des Echokompensators ist es, das an der vermittlungseinrichtungsseitigen Gabelschaltung reflektierte Downstreamsignal, welches sich dem vermittlungseinrichtungsseitig empfangenen Nutzsignal in Upstreamrichtung überlagert, nahezu vollständig subtrahiert wird. Dies bedeutet, dass schon geringste Änderungen an der Impedanz der 2-Drahtleitung zu einer Veränderung der Gabelübergangsdämpfung (hinsichtlich Phase und Amplitude) führen und der Echokompensator zusammen mit dem Equalizer neu eingestellt werden müssen.

Für das in FIG 1 dargestellten Anschlussszenario gilt für die Übertragungswege hinsichtlich der ISDN- und die xDSL-Übertragung, dass der Übertrager Tr1 mit der Impedanz der Teilnehmeranschlussleitung $Z_{Ltg}$ abgeschlossen ist. Parallel dazu liegt die Impedanz $Z_{xDSL}$ der xDSL-Übertragung bzw. der xDSL-Leitungstreiberseite an. Die Übertragungsstrecke der xDSL-Übertragung weist im Frequenzbereich der ISDN-Übertragung (bis ca. 140 kHz) nur eine geringe Sperrdämpfung auf, so dass sich Impedanzänderungen auf der xDSL-Leitungstreiberseite auch auf die Eingangsimpedanz $Z_{xDSL}$ auswirken. Schon eine geringfügige Änderung der Eingangsimpedanz $Z_{xDSL}$ führt deshalb zu Störungen und Unterbrechungen der ISDN-Übertragung. In aktuellen Teilnehmeranschlussnetzen treten diese Impedanzänderungen derzeit durch die Aktivierung bzw. Deaktivierung von xDSL-Leitungstreibern auf. Diese sind im Ruhezustand in der Regel hochohmig, alternativ können sie auch einen niederohmigen Wert aufweisen.

In US 5 856 758 ist beispielsweise ein mit Hilfe eines differentiellen Operationsverstärkers realisierter Leitungstreiber beschrieben, durch welchen mittels einer Spannungs- und Stromrückkopplung im aktiven Zustand eine bestimmte Ausgangsimpedanz synthetisiert wird - auch als Impedanzsynthese bezeichnet. Durch die Impedanzsynthese wird eine Reduzierung der Verlustleistung und eine Minimierung der Betriebsspannung erreicht. Bei der Aktivierung bzw. Deaktivierung von eine Impedanzsynthese realisierenden Leitungstreibern treten jedoch nachteilig sprunghafte Änderungen der Ausgangsimpedanz - auch als Impedanzsprünge bezeichnet - auf.

Es sind auch Leitungstreiber ohne Impedanzsynthese bekannt, für deren Betrieb jedoch die Leerlaufspannung um bis zu 6dB angehoben werden und die externen Widerstände signifikant um einen bestimmten Impedanz-Synthesefaktor erhöht werden müssen. Dies führt zu einer erhöhten Leistungsaufnahme und zu zusätzlicher Verlustleistung.

Bei aktuellen Lösungen für die Ausgestaltung von xDSL-Leitungstreibern können Impedanzsprünge nur unter nachfolgend aufgeführten Bedingungen weitgehend vermieden werden:

- Wenn die Leitungstreiber im Ruhezustand einen sehr niederohmigen Zustand annehmen (Kurzschluss gegen Erde) und im aktiven Zustand niederohmig bleiben, d. h. keine Impedanzsynthese realisiert wird. Dagegen treten bei Leitungstreibern mit Impedanzsynthese die oben genannten Störungen beim Umschalten der Betriebsmodi auf.

- Wenn die xDSL-Übertragung daueraktiv bleibt, was jedoch mit mehreren Nachteilen verbunden ist - beispielsweise erhöhte Verlustleistung, zusätzlicher Aufwand für die Kühlung (Klimaanlage), Energiekosten, erhöhte Störungen im Kabel.

Der Erfindung liegt somit die Aufgabe zugrunde, störende Unterbrechungen der ISDN-Übertragung auf Teilnehmeranschlussleitungen, verursacht durch die Aktivierung oder Deaktivierung der xDSL-Übertragung, insbesondere der xDSL-Leitungstreiber zu vermeiden. Die Aufgabe wird ausgehend von einer Kommunikationsanordnung und einer Übertragungseinrichtung gemäß den Merkmalen des Oberbegriffs der Patentansprüche 1 und 8 durch die jeweils kennzeichnenden Merkmale gelöst. Des weiteren wird die Aufgabe durch eine an die Übertragungseinheit anschließbare Schaltungsanordnung gemäß den Merkmalen des Patentanspruchs 13 gelöst.

Bei der erfindungsgemäßen Kommunikationsanordnung zur Informationsübermittlung ist an zumindest eine Übertragungsleitung zumindest eine jeweils einen aktiven oder passiven Betriebszustand aufweisende Übertragungseinheit zum Senden und/ oder Empfangen von Informationen mit einer vom aktuellen Betriebszustand abhängigen Eingangsimpedanz angeschlossen. Der wesentliche Aspekt der erfindungsgemäßen Kommunikationsanordnung besteht darin, dass den aktuellen Betriebszustand der Übertragungseinheit erfassende Erfassungsmittel vorgesehen sind, denen Impedanzmittel zugeordnet sind, durch welche in Abhängigkeit von dem ermittelten Betriebszustand zumindest eine schaltbare elektrische Komponente in der Art und Weise geschaltet wird, dass die Eingangsimpedanz der zumindest einen Übertragungseinheit auf einen annähernd konstanten Wert gehalten wird.

Der wesentliche Vorteil der erfindungsgemäßen Kommunikationsanordnung besteht darin, dass Impedanzsprünge bei der Aktivierung bzw. Deaktivierung der an die Übertragungsleitung angeschlossenen Übertragungseinheit verhindert werden. Durch das Vermeiden von Impedanzsprüngen wird die Störung bzw. Unterbrechung einer bereits laufenden Übertragung von Informationen über die selbe Übertragungsleitung - z.B. eine ISDN-Übertragung - vermieden. Durch das Vermeiden von Impedanzsprüngen wird die Gabelübergangsdämpfung ( hinsichtlich Phase und Amplitude) auf einen annähernd konstanten Wert gehalten, so dass hinsichtlich der ISDN-Übertragung der Echokompensator und Equalizer nicht mehr neu eingestellt werden muss.

Weitere vorteilhafte Ausgestaltungen der erfindungsgemäßen Kommunikationsanordnung sowie eine Übertragungseinrichtung zum Senden und/ oder Empfangen von Informationen sowie eine an die Übertragungseinrichtung anschließbare Schaltungsanordnung eine sind den weiteren Ansprüchen zu entnehmen.

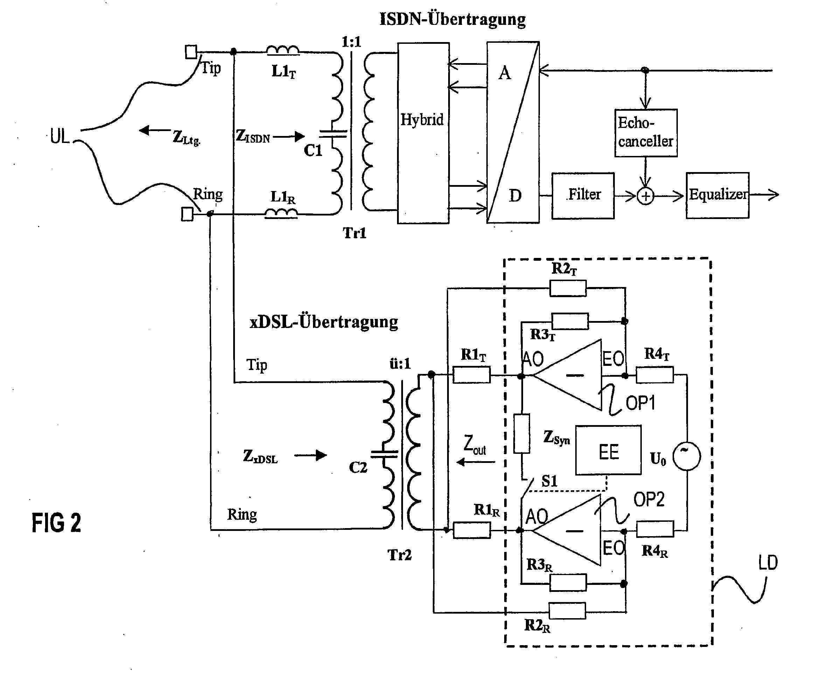

Im folgenden wird die erfindungsgemäße Kommunikationsanordnung anhand eines Blockschaltbildes näher erläutert. FIG 2 zeigt das bereits allgemein in FIG 1 erläuterte Anschlussszenario, welches das vermittlungsstellenseitige Ende sowohl der Schmalbandübertragung (ISDN-Übertragung) als auch der Breitbandübertragung (xDSL-Übertragung) darstellt. In diesem Ausführungsbeispiel ist der in FIG 1 allgemein dargestellte Leitungstreiber als xDSL-Leitungstreiber LD mit Impedanzsynthese ausgestaltet. Der xDSL-Leitungstreiber LD umfasst 2 Operationsverstärker OP1,2, welche jeweils einen Ausgang AO aufweisen. Erfindungsgemäß sind die Ausgänge AO der beiden Operationsverstärker OP1, 2 über einen Schalter S und einer Impedanz $Z_{Syn}$ miteinander verbindbar.

Erfindungsgemäß ist der Schalter S mit einer Auswertelogik verbunden durch welche der Aktiv- bzw. Passivzustand des xDSL-Leitungstreibers LD ermittelt werden kann. Beispielsweise kann die Auswertelogik als dem xDSL-Leitungstreiber LD zugeordnete Erfassungseinheit EE zur Auswertung von über die Übertragungsleitung UL übermittelten Wake-up Signalen gemäß dem Standard ITU-T G.992.2 ausgestaltet sein. Anhand der an den xDSL-Leitungstreiber LD herangeführten Wake-up Signalen kann durch die Erfassungseinheit EE jeweils der aktuelle Aktiv- bzw. Passivzustand ermittelt und in Abhängigkeit von dem ermittelten Zustand der Schalter S geöffnet bzw. geschlossen werden.

Des weiteren sind die Ausgänge AO der beiden Operationsverstärker OP1,2 jeweils über einen Widerstand $R3_T$, $R3_R$ an einen entsprechenden Eingang EO des jeweiligen Operationsverstärkers OP1,2 rückgekoppelt. Weiter ist der Eingang EO des ersten Operationsverstärkers OP1 über einen Widerstand $R2_T$ und einen Widerstand $R1_R$ mit dem Ausgang AO des zweiten Operationsverstärkers OP2 verbunden. Entsprechend ist der Eingang EO des zweiten Operationsverstärkers OP2 über einen Widerstand $R2_R$ und einen Widerstand $R1_T$ mit dem Ausgang AO des ersten Operationsverstärkers OP1 verbunden. Die Ausgänge der beiden Operationsverstärker OP1,2 sind jeweils über den Widerstand $R1_T$, $R1_R$ an einen Übertrager Tr2 angeschlossen. Die Eingänge EO der beiden Operationsverstärker OP1,2 sind über Widerstände $R4_T$, $R4_R$ und über eine Wechselspannungsquelle $U_0$ (welche in diesem Ausführungsbeispiel das in Richtung Teilnehmer zu übermittelnde xDSL-Datensignal repräsentiert) miteinander verbunden.

Über den das Übertragungsverhältnis ü:1 aufweisenden Übertrager Tr2 ist der xDSL-Leitungstreiber LD an die Teilnehmeranschlussleitung UL angeschaltet. Im folgenden wird davon ausgegangen, dass der xDSL-Leitungstreiber LD nur dann aktiviert wird, wenn tatsächlich auf die Teilnehmeranschlussleitung UL zu übermittelnde Informationen seitens der Vermittlungsstelle VST vorliegen oder wenn Wake-up Signale durch die Erfassungseinheit erfasst werden. Die in FIG 2 dargestellten und der Übertragungsleitung UL zugeordneten Induktivitäten $L1_T$, $L1_R$ stellen ein Tiefpaßfilter dar, durch welches Frequenzanteile der xDSL-Übertragung, die oberhalb des Frequenzspektrums der ISDN-Übertragung liegen, gedämpft werden. Die Kapazitäten C1, C2 dienen zur Gleichstromabtrennung.

Für dieses Ausführungsbeispiel seien folgende Werte angenommen:

$$C1 \approx 1\mu F, \quad C2 \approx 10nF$$

$$L_{Tr1} \approx 10mH, \quad L_{Tr2} \approx 1mH, \quad L1 \approx 200\mu H$$

Für die Beschaltung des xDSL-Leitungstreibers LD seien folgende Verhältnisse angenommen.

$$R1_T = R1_R, \quad R2_T = R2_R$$

$$R3_T = R3_R, \quad R4_T = R4_R$$

$$R2, \quad R3, \quad R4 >> R1$$

Hinsichtlich des xDSL-Leitungstreibers ergibt sich folgender Impedanz-Synthesefaktor $k_{synth.}$:

$$k_{synth.} \quad (= R2/ \; R2 - R3)$$

Die Ausgangsimpedanz $Z_{out}$ des xDSL-Leitungstreibers LD ergibt sich zu:

$$Z_{out} = k_{synth} * (2 * R1)$$

Erfindungsgemäß ist für den schaltbaren Widerstand $Z_{Syn}$ folgender Wert festgelegt:

$$Z_{syn} = Z_{out} - 2 * R1$$

Bei der Berechnung des Widerstands $Z_{syn}$ können in der Regel die Widerstände R2, R3 und R4 vernachlässigt werden, da sie circa 2 Größenordnungen über dem Wert von R1 liegen.

Erfindungsgemäß sind die Erfassungseinheit EE und der damit verbundene Schalter S1 folgendermaßen konfiguriert:

- Bei aktiv bzw. niederohmig geschalteten xDSL-Leitungstreiber LD ist der Schalter S1 geöffnet und damit der Übertrager Tr2 treiberseitig mit $Z_{out}$ abgeschlossen.

- Bei deaktivierten (passiven) bzw. hochohmig geschalteten xDSL-Leitungstreiber LD (Ruhezustand) ist der Schalter S1 geschlossen, wodurch der Widerstand $Z_{syn} = Z_{out} - 2 * R1$ zwischen die Ausgänge AO der beiden Operationsverstärker OP1, 2 geschaltet ist.
  $\Rightarrow$ Damit wird der Übertrager Tr2 treiberseitig mit

$$Z_{out} = 2 * R1 + Z_{Syn}$$

abgeschlossen.

Unter Berücksichtigung der erfindungsgemäßen Festlegung für die Impedanz

$$Z_{syn} = Z_{out} - 2 * R1$$

gilt:

$$Z_{out} = 2 * R1 + Z_{Syn} = 2 * R1 + Z_{out} - 2 * R1 = Z_{out}$$

Aus der letzten Beziehung folgt, dass der xDSL-Leitungstreibers LD sowohl im aktiven als auch im passiven Zustand mit der gleichen Ausgangsimpedanz $Z_{out}$ abgeschlossen wird. Durch das Schalten eines Widerstandes mit dem Wert $Z_{syn} = Z_{out} - 2 * R1$ zwischen die beiden Ausgänge AO der Operationsverstärker OP1,2 des Leitungstreiber LD im Ruhezustand wird ein Impedanzsprung seitens des xDSL-Leitungstreibers bei der Aktivierung bzw. Deaktivierung der xDSL-Übertragung vermieden, welche ansonsten zu einer Unterbrechung der ISDN-Übertragung führen würde, da der Echokompensator neu eingestellt werden muss.

Die erfindungsgemäße schaltbare Impedanz $Z_{syn}$ kann alternativ - optional zusammen mit dem Schalter S - als dem xDSL-Leitungstreiber zugeordnete, externe Zusatzbeschaltung ausgestaltet sein - nicht dargestellt. Gemäß einer weiteren nicht dargestellten Ausgestaltungsvariante kann die Zusatzbeschaltung auch die Erfassungseinheit EE umfassen.

**Patentansprüche**

1.  Kommunikationsanordnung zur Informationsübermittlung umfassend zumindest eine Übertragungsleitung (UL) sowie zumindest eine an die Übertragungsleitung (UL) angeschlossene und jeweils einen aktiven oder passiven Betriebszustand aufweisende Übertragungseinheit (LD) zum Senden und/oder Empfangen von Informationen mit einer vom aktuellen Betriebszustand abhängigen Eingangsimpedanz ($Z_{xDSL}$),
    **dadurch gekennzeichnet,**

    - dass den aktuellen Betriebszustand der Übertragungseinheit (LD) erfassende Erfassungsmittel (EE) vorgesehen sind,
    - dass den Erfassungsmitteln (EE) zugeordnete Impedanzmittel (S1, $Z_{syn}$) vorgesehen sind, durch welche in Abhängigkeit von dem ermittelten Betriebszustand zumindest eine schaltbare elektrischen Komponente ($Z_{Syn}$) in der Art und Weise geschaltet wird, dass die Eingangsimpedanz ($Z_{xDSL}$) der zumindest einen Übertragungseinheit (LD) auf einen annähernd konstanten Wert gehalten wird.

2.  Kommunikationsanordnung nach Anspruch 1,
    **dadurch gekennzeichnet,**
    **dass** die Übertragungseinheit (LD) zumindest zwei die zu übermittelnden Informationen auf die zumindest eine Übertragungsleitung (UL) aussendende Operationsverstärker (OP1, OP2) umfasst,
    **dass** zwischen Ausgängen (AO) der beiden Operationsverstärker (OP1, OP2) über einen durch die Erfassungsmittel (EE) gesteuerten Schalter (S1) die zumindest eine elektrische Komponente ($Z_{Syn}$) geschaltet ist, wobei die Impedanzmittel (S, $Z_{Syn}$) und die Erfassungsmittel (EE) derart ausgestaltet sind, dass der Schalter (S1) im aktiven Betriebszustand geöffnet und im passiven Betriebszustand geschlossen ist.

3.  Kommunikationsanordnung nach Anspruch 1 oder 2,
    **dadurch gekennzeichnet,**
    **dass** die zumindest eine elektrische Komponente zumindest einen elektrischen Widerstand ($Z_{Syn}$) umfasst.

4.  Kommunikationsanordnung nach einem der vorherigen Ansprüche,
    **dadurch gekennzeichnet,**
    **dass** die Übertragungseinheit (LD) zum Senden und/oder Empfangen von Informationen gemäß einem xDSL-Übertragungsverfahren ausgestaltet ist.

5.  Kommunikationsanordnung nach einem der vorherigen Ansprüche,

**dadurch gekennzeichnet,**
**dass** an die zumindest eine Übertragungsleitung (UL) zumindest eine weitere Übertragungseinheit zum Senden und/oder Empfangen von gemäß dem ISDN-Übertragungsverfahren ausgestalteten Informationen angeschlossen ist.

6. Kommunikationsanordnung nach einem der vorherigen Ansprüche,
   **dadurch gekennzeichnet,**
   **dass** die Erfassungsmittel (EE) derart ausgestaltet sind, dass über die zumindest eine Übertragungsleitung (UL) übermittelte Aktivierungssignale erfasst werden,
   **dass** die Erfassungsmittel (EE) derart ausgestaltet sind, dass bei Erfassen eines Aktivierungssignals der aktive Betriebszustand der Übertragungseinheit (LD) festgestellt wird.

7. Kommunikationsanordnung nach Anspruch 6,
   **dadurch gekennzeichnet,**
   **dass** die Aktivierungssignale als Wake-up Signale gemäß dem Standard ITU-T G.922 ausgestaltet sind.

8. Übertragungseinheit (LD) zum Senden und/oder Empfangen von Informationen über zumindest eine anschließbare Übertragungsleitung (UL), wobei die Übertragungseinheit (LD) einen aktiven oder passiven Betriebszustand sowie eine vom aktuellen Betriebszustand abhängige Eingangsimpedanz ($Z_{xDSL}$) aufweist,
   **dadurch gekennzeichnet,**
   **dass** den aktuellen Betriebszustand der Übertragungseinheit (LD) erfassende Erfassungsmittel (EE) vorgesehen sind, dass den Erfassungsmitteln (EE) zugeordnete Impedanzmittel (S1, $Z_{Syn}$) vorgesehen sind, durch welche in Abhängigkeit von dem ermittelten aktuellen Betriebszustand zumindest eine schaltbare elektrischen Komponente ($Z_{Syn}$) in der Art und Weise geschaltet wird, dass die Eingangsimpedanz ($Z_{xDSL}$) der Übertragungseinheit (LD) auf einen annähernd konstanten Wert gehalten wird.

9. Übertragungseinheit nach Anspruch 8,
   **dadurch gekennzeichnet,**
   **dass** zumindest zwei die zu übermittelnden Informationen auf die zumindest eine Übertragungsleitung (UL) aussendende Operationsverstärker (OP1, OP2) angeordnet sind, dass zwischen Ausgängen (AO) der beiden Operationsverstärker (OP1,2) über einen durch die Erfassungsmittel (EE) gesteuerten Schalter (S1) die zumindest eine elektrische Komponente ($Z_{Syn}$) geschaltet ist, wobei die Impedanzmittel (S1, $Z_{Syn}$) und die Erfassungsmittel (EE) derart ausgestaltet sind, dass der Schalter (S1) im aktiven Betriebszustand geöffnet und im passiven Betriebszustand geschlossen ist.

10. Übertragungseinheit nach Anspruch 8 oder 9,
    **dadurch gekennzeichnet,**
    **dass** die zumindest eine elektrische Komponente zumindest einen elektrischen Widerstand ($Z_{Syn}$) umfasst.

11. Übertragungseinheit nach einem der Ansprüche 8 bis 10,
    **dadurch gekennzeichnet,**
    **dass** die Übertragungseinheit (LD) zum Senden und/oder Empfangen von Informationen gemäß einem xDSL-Übertragungsverfahren ausgestaltet ist.

12. Übertragungseinheit nach einem der Ansprüche 8 bis 11,
    **dadurch gekennzeichnet,**
    **dass** die Erfassungsmittel und die Impedanzmittel als extern an die Übertragungseinheit (LD) anschließbare Schaltungsanordnung ausgestaltet sind.

13. Schaltungsanordnung zum externen Anschluss an eine Übertragungseinheit nach einem der Ansprüche 8 bis 12,
    **dadurch gekennzeichnet,**
    **dass** mit den in der Übertragungseinheit angeordneten Erfassungsmitteln (EE) verbindbare Impedanzmittel (S1, $Z_{Syn}$) vorgesehen sind, welche in der Art und Weise ausgestaltet sind, dass in Abhängigkeit von dem ermittelten aktuellen Betriebszustand mit Hilfe von zumindest einer schaltbaren elektrischen Komponente ($Z_{Syn}$) die Eingangsimpedanz ($Z_{xDSL}$) der Übertragungseinheit (LD) auf einen annähernd konstanten Wert gehalten wird.

14. Schaltungsanordnung nach Anspruch 13,
    **dadurch gekennzeichnet,**

**dass** durch die Schaltungsanordnung die Erfassungsmittel (EE) umfasst werden.

**Claims**

1.  Communication arrangement for information transmission comprising at least one transmission line (UL) and at least one transmission unit (LD), which is connected to the transmission line (UL) and has a respective active or passive operating state, for sending and/or receiving information with an input impedance ($Z_{xDSL}$) which is dependent on the current operating state,
    **characterized**

    - **in that** sensing means (EE) sensing the current operating state of the transmission unit (LD) are provided,
    - **in that** impedance means (S1, $Z_{Syn}$) associated with the sensing means (EE) are provided which take the ascertained operating state as a basis for switching at least one switchable electrical component ($Z_{Syn}$) such that the input impedance ($Z_{xDSL}$) of the at least one transmission unit (LD) is kept at an approximately constant value.

2.  Communication arrangement according to Claim 1,
    **characterized**
    **in that** the transmission unit (LD) comprises at least two operational amplifiers (OP1, OP2) which send out the information to be transmitted onto the at least one transmission line (UL),
    **in that** outputs (AO) of the two operational amplifiers (OP1, OP2) have the at least one electrical component ($Z_{Syn}$) connected between them by means of a switch (S1) which is controlled by the sensing means (EE), the impedance means (S, $Z_{Syn}$) and the sensing means (EE) being in a form such that the switch (S1) is open in the active operating state and is closed in the passive operating state.

3.  Communication arrangement according to Claim 1 or 2,
    **characterized**
    **in that** the at least one electrical component comprises at least one electrical resistor ($Z_{Syn}$).

4.  Communication arrangement according to one of the preceding claims,
    **characterized**
    **in that** the transmission unit (LD) is designed for sending and/or receiving information on the basis of an xDSL transmission method.

5.  Communication arrangement according to one of the preceding claims
    **characterized**
    **in that** the at least one transmission line (UL) has at least one further transmission unit connected to it for sending and/or receiving information configured on the basis of the ISDN transmission method.

6.  Communication arrangement according to one of the preceding claims,
    **characterized**
    **in that** the sensing means (EE) are in a form such that activation signals transmitted via the at least one transmission line (UL) are sensed
    **in that** the sensing means (EE) are in a form such that sensing an activation signal involves establishing the active operating state of the transmission unit (LD).

7.  Communication arrangement according to Claim 6,
    **characterized**
    **in that** the activation signals are in the form of wake-up signals on the basis of the ITU-T G.922 standard.

8.  Transmission unit (LD) for sending and/or receiving information about at least one connectable transmission line (UL), wherein the transmission unit (LD) has an active or passive operating state and also an input impedance ($Z_{xDSL}$) which is dependent on the current operating state,
    **characterized**
    **in that** sensing means (EE) sensing the current operating state of the transmission unit (LD) are provided,
    **in that** impedance means (S1, $Z_{Syn}$) associated with the sensing means (EE) are provided which take the ascertained current operating state as a basis for switching at least one switchable electrical component ($Z_{Syn}$) such that the input impedance ($Z_{xDSL}$) of the transmission unit (LD) is kept at an approximately constant value.

9. Transmission unit according to Claim 8,
   **characterized**
   **in that** at least two operational amplifiers (OP1, OP2) which send out the information to be transmitted onto the at least one transmission line (UL) are arranged,
   **in that** outputs (AO) of the two operational amplifiers (OP1, 2) have the at least one electrical component ($Z_{Syn}$) connected between them by means of a switch (S1) which is controlled by the sensing means (EE), the impedance means (S1, $Z_{Syn}$) and the sensing means (EE) being in the form such that the switch (S1) is open in the active operating state and is closed in the passive operating state.

10. Transmission unit according to Claim 8 or 9,
    **characterized**
    **in that** the at least one electrical component comprises at least one electrical resistor ($Z_{Syn}$).

11. Transmission unit according to one of Claims 8 to 10,
    **characterized**
    **in that** the transmission unit (LD) is designed for sending and/or receiving information on the basis of an xDSL transmission method.

12. Transmission unit according to one of Claims 8 to 11,
    **characterized**
    **in that** the sensing means and the impedance means are in the form of a circuit arrangement which can be connected to the transmission unit (LD) externally.

13. Circuit arrangement for external connection to a transmission unit according to one of Claims 8 to 12,
    **characterized**
    **in that** impedance means (S1, $Z_{Syn}$) which can be connected to the sensing means (EE) arranged in the transmission unit are provided which are in a form such that the ascertained current operating state is taken as a basis for using at least one switchable electrical component ($Z_{Syn}$) to keep the input impedance ($Z_{xDSL}$) of the transmission unit (LD) at an approximately constant value.

14. Circuit arrangement according to Claim 13,
    **characterized**
    **in that** the circuit arrangement comprises the sensing means (EE).

**Revendications**

1. Dispositif de communication pour la transmission d'informations, comprenant au moins une ligne de transmission (UL) ainsi qu'au moins une unité de transmission (LD), raccordée à la ligne de transmission (UL) et présentant respectivement un état de fonctionnement actif ou passif, pour émettre et/ou recevoir des informations avec une impédance d'entrée ($Z_{xDSL}$) qui dépend de l'état de fonctionnement actuel,
   **caractérisé en ce que**

   - sont prévus des moyens de détection (EE) qui détectent l'état de fonctionnement actuel de l'unité de transmission (LD),
   - sont prévus des moyens d'impédance (S1, $Z_{Syn}$) associés au moyens de détection (EE) et par lesquels au moins un composant électrique commutable ($Z_{Syn}$) est commuté de manière telle, en fonction de l'état de fonctionnement détecté, que l'impédance d'entrée ($Z_{xDSL}$) de l'au moins une unité de transmission (LD) est maintenue à une valeur approximativement constante.

2. Dispositif de communication selon la revendication 1,
   **caractérisé en ce que**

   - l'unité de transmission (LD) comprend au moins deux amplificateurs d'opération (OP1, OP2) qui émettent sur l'au moins une ligne de transmission (UL) les informations à transmettre,
   - l'au moins un composant électrique ($Z_{Syn}$) étant commuté entre des sorties (AO) des deux amplificateurs d'opération (OP1, OP2) par l'intermédiaire d'un commutateur (S1) commandé par les moyens de détection (EE), les moyens d'impédance (S, $Z_{Syn}$) et les moyens de détection (EE) étant réalisés de manière telle que le commutateur (S1) est ouvert à l'état de fonctionnement actif et est fermé à l'état de fonctionnement passif.

**3.** Dispositif de communication selon la revendication 1 ou 2, **caractérisé en ce que** l'au moins un composant électrique comprend au moins une résistance électrique ($Z_{Syn}$).

**4.** Dispositif de communication selon l'une des revendications précédentes, **caractérisé en ce que** l'unité de transmission (LD) est réalisée pour émettre et/ou pour recevoir des informations selon un procédé de transmission xDSL.

**5.** Dispositif de communication selon l'une des revendications précédentes, **caractérisé en ce qu'**est raccordée, à l'au moins une ligne de transmission (UL), au moins une autre unité de transmission pour émettre et/ou pour recevoir des informations réalisées conformément au procédé de transmission RNIS.

**6.** Dispositif de communication selon l'une des revendications précédentes, **caractérisé en ce que**

- les moyens de détection (EE) sont réalisés de manière telle que des signaux d'activation transmis sur l'au moins une ligne de transmission (UL) sont détectés,
- les moyens de détection (EE) sont réalisés de manière telle que, à la détection d'un signal d'activation, l'état de fonctionnement actif de l'unité de transmission (LD) est constaté.

**7.** Dispositif de communication selon la revendication 6, **caractérisé en ce que** les signaux d'activation se présentent sous la forme de signaux wake-up conformément au standard G.922 de l'UIT-T.

**8.** Unité de transmission (LD) pour émettre et/ou recevoir des informations via au moins une ligne de transmission (UL) raccordable, l'unité de transmission (LD) présentant un état de fonctionnement actif ou passif ainsi qu'une impédance d'entrée ($Z_{xDSL}$) qui dépend de l'état de fonctionnement actuel,
**caractérisée en ce que**

- sont prévus des moyens de détection (EE) qui détectent l'état de fonctionnement actuel de l'unité de transmission (LD),
- sont prévus des moyens d'impédance (S1, $Z_{Syn}$) associés au moyens de détection (EE) et par lesquels au moins un composant électrique commutable ($Z_{Syn}$) est commuté de manière telle, en fonction de l'état de fonctionnement actuel détecté, que l'impédance d'entrée ($Z_{xDSL}$) de l'unité de transmission (LD) est maintenue à une valeur approximativement constante.

**9.** Unité de transmission selon la revendication 8, **caractérisée en ce que**

- au moins deux amplificateurs d'opération (OP1, OP2) qui émettent sur l'au moins une ligne de transmission (UL) les informations à transmettre sont montés,
- l'au moins un composant électrique ($Z_{Syn}$) est commuté entre des sorties (AO) des deux amplificateurs d'opération (OP1, 2) par l'intermédiaire d'un commutateur (S1) commandé par les moyens de détection (EE), les moyens d'impédance (S, $Z_{Syn}$) et les moyens de détection (EE) étant réalisés de manière telle que le commutateur (S1) est ouvert à l'état de fonctionnement actif et est fermé à l'état de fonctionnement passif.

**10.** Unité de transmission selon la revendication 8 ou 9, **caractérisée en ce que** l'au moins un composant électrique comprend au moins une résistance électrique ($Z_{Syn}$).

**11.** Unité de transmission selon l'une des revendications 8 à 10, **caractérisée en ce que** l'unité de transmission (LD) est réalisée pour émettre et/ou pour recevoir des informations selon un procédé de transmission xDSL.

**12.** Unité de transmission selon l'une des revendications 8 à 11**, caractérisée en ce que** les moyens de détection et les moyens d'impédance se présentent sous la forme d'un ensemble de circuit raccordable de manière externe à l'unité de transmission (LD).

**13.** Ensemble de circuit destiné à être raccordé de manière externe à une unité de transmission selon l'une des revendications 8 à 12, **caractérisée en ce que** sont prévus des moyens d'impédance (S1, $Z_{Syn}$) pouvant être reliés aux moyens de détection (EE) situés dans l'unité de transmission, lesquels moyens d'impédance se présentent de manière telle que l'impédance d'entrée ($Z_{xDSL}$) de l'unité de transmission (LD) est, en fonction de l'état de fonctionnement actuel déterminé, maintenue à une valeur approximativement constante à l'aide d'au moins un composant électrique commutable ($Z_{Syn}$).

14. Ensemble de circuit selon la revendication 13, **caractérisé en ce que** les moyens de détection (EE) sont inclus dans le circuit.

FIG 1

EP 1 532 802 B1

**FIG 2**

**EP 1 532 802 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

* US 5856758 A